# EUROPEAN PATENT APPLICATION

(11) **EP 2 886 240 A1**
(43) Date of publication of application: **24.06.2015**
(21) Application number: 14001931.6
(22) Date of filing: 04.06.2014
(51) Int. Cl.: B23K 26/08, B23K 26/40, B32B 3/16, B32B 38/00

(54) **Process and device for realizing a flexible material from a rigid material**

(30) Priority: 20.12.2013 RO 201301034
(71) Applicant: SC Eulac Laser SRL, 410078 Oradea, jud.Bihor (RO)
(72) Inventor: Proietti Orzella, Guido, 00125 Roma (IT)
(74) Representative: Stanciu, Adelina

(57) **Abstract**

Process that transforms a large category of rigid materials such as wood, metal or plastic into flexible materials possible to be used in industry in any field that requires flexible materials following the steps: a special dye layer **(4)** is applied on the wood layer **(3),** then a layer **(2)** of special liquid glue is applied on the back side of the wood layer **(3)** using a silk-screen process similar to that used in the ceramic and glass processing, then a flexible support layer **(1)** is applied above the glue layer **(2),** after which the flexible support layer **(1)** is pressed together with the liquid glue layer **(2)** and the wood layer **(3)** by using a calander pressing machine, then a special hardener layer **(5)** is applyed on the front side of the wood layer **(3)** and, in the end, regular geometric shapes are cut in half depth of the wood layer **(3)** leaving the fabric untouched, with the help of a CNC cutting laser device provided with a working table **(9)** provided with a adjusting screw **(10)** with micrometer precision on X and Y axis, a vacuum source that keeps the wood layer **(3)** plane and in touch with the working table **(9),** some gas vacuum cleaners **(12),** two guide rails **(13)** of the laser system made of aluminium with hollow profile system, some focusing lens **(14),** some modified laser tubes **(15)** and two mirrors **(16)** producing a final cut width of 0,1 mm.

## Description

The invention is presenting a process and a device that are used to transform a large category of rigid materials into flexible materials. The process is based on the modulation concept that can be applied both to plastic materials and to those made of wood and metal. The invention may be used at an industrial level where ever there is a need for space saving or easy transportation and manipulating, or modelling of new complex big materials from multiplying components. The invention is possible to be used in decoration production, automotives, ships, air-plains, clothing, shoes making, caps, electronic field, architecture, and any other industrial field that uses with flexible materials.

It is known the patent document No. AU 7743141 B2 that presents a process for transforming a rigid material such as a shell or a crust into a flexible material. The process goes like this: a small leaf of ½ mm of rigid material, such as a crust is attached with glue or by warm or ultrasonic welding on a flexible layer such as cotton, leather, neoprene, polyvinyl choride (p.v.c.) or other similar materials. Then, polygonal patterns with three up to six sides are laser cut into the rigid material taking care not to cut the flexible material, too. The material has a mosaic configuration with a lot of small elements. Then, the rigid layer is lacquered.

This solution has the disadvantage that the resulted flexible material cannot be bended anyhow but only by a diagonal direction which restricts its further using possibilities. Another disadvantage is that the process can be used only for small production and only for rigid materials such as shell or crust.

It is also known a patent document No. US 2013/ 0216740 A1 that presents a process that connects segments of rigid material in order to obtain a flexible material. The result is meant to be used for making covers for electronic devices. The process implies the cut of geometric patterns in rigid materials, such as metals, alloys or tough plastic materials and then the removing of them from the rigid material. The result is not so rigid as the initial one and can be easy manipulated.

The disadvantage of this method is that the resulted material has a low flexibility which restricts the using field of that material and it cannot be used for making shoes, foe example, or any other product that requires a very good flexibility and malleable. Another disadvantage is that the resulted material has a low resistance because the rigid material has been reduced.

The technical problem to be solved by this invention is to realize a process and a device capable to allow the obtaining of a flexible material from a lot of rigid materials, and the result to be highly malleable, to keep its resistance, to be possible to be folded by any direction and to be used in several industrial fields.

The process for realizing a flexible material from a rigid material, according to the invention, eliminates the above mentioned disadvantages and solves the technical problem by using the modulation concept which means that the process transforms a rigid material into smaller modules creating a flexible material. The process consists of the following steps: first, the rigid material, for example wood, is dyed in the wanted colour by painting it with a dye; then, the back side of the material, that can be wood, plastic or metal is covered with a flexible support layer using a glue; then the resulted "sandwich" is pressed. The front side of the wood material is covered with a hardener and several cuts in different shapes are made in the rigid material using a modified CNC cutting laser device.

The process for realizing a flexible material from a rigid material, according to the invention, has the following advantages:
- the process can be used in industrial fields;
- the resulted materials can be shaped in technological materials with new complex dimensions and shapes that can be used as raw materials for industrial devices and equipments;
- because the flexible material is glued on the rigid material, the resulted material is very resistant to folding and traction;
- because the wood (rigid) material is cut with very high precision by a very complex and multidirectional network, the resulted material can be folded in any shape occupying a smaller space and being easy to be packaged, transported and stored.

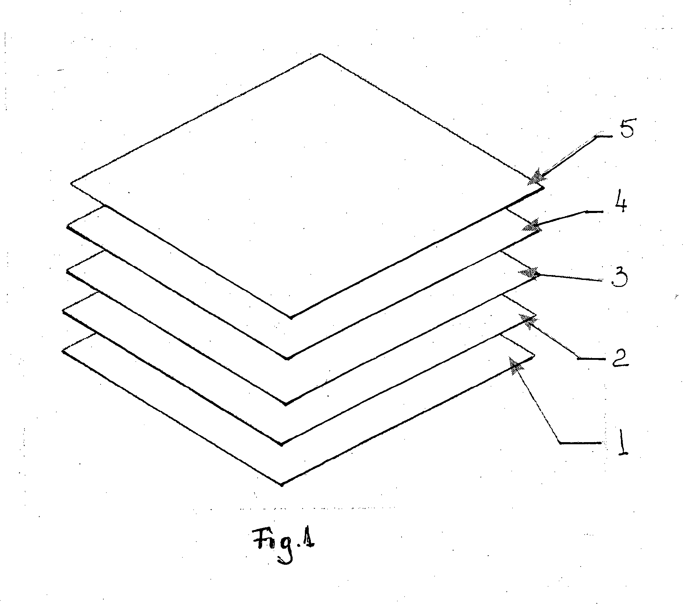

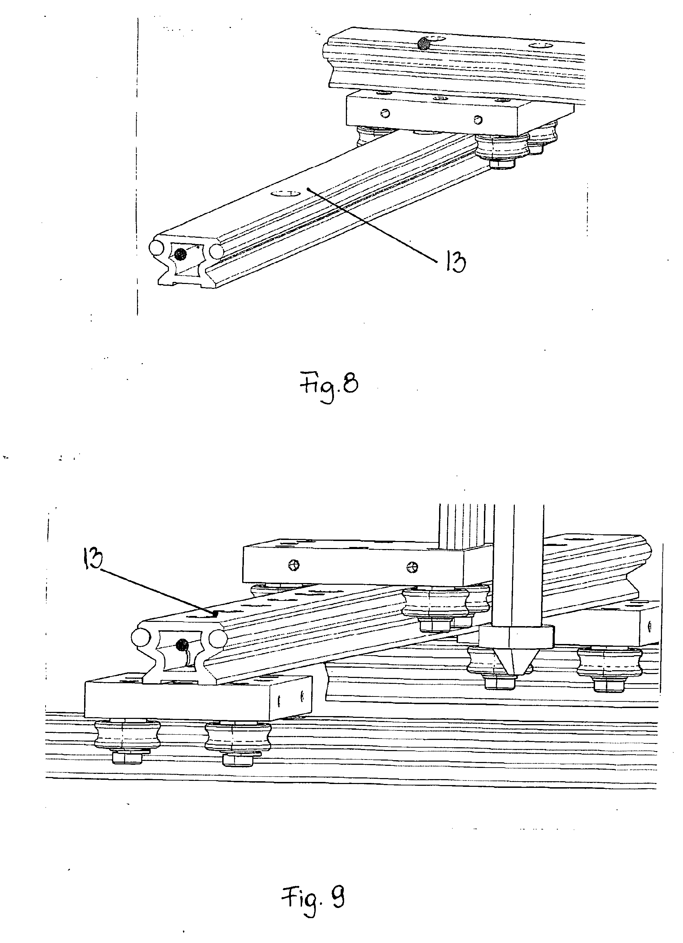

Here is a practical example of a process for realizing a flexible material from a rigid material and of the device as well, according to the invention and related to the **figures 1****,** **2****,** **3****,** **4a****,** **4b****,** **5****,** **6, 7****,** **8, 9****,** **10****,** **11** and **12****,** that represent:
- **Fig. 1****:** the resulted flexible material in the shape of a "sandwich", with five layers;
- **Fig. 2****:** calander pressing machine;
- **Fig. 3****:** CNC non-standard Laser Cutting Machine;
- **Fig. 4a****:** view from above of the cutting machine visualizing the aspirated air jet **11;**
- **Fig. 4b****:** view from bellow of the cutting machine visualizing the aspirated air jet **11;**
- **Fig. 5****:** the vacuum machines **12** that evacuate the gas;
- **Fig. 6****:** the chassis of the cutting machine visualizing the aspirated directions of the gas;
- **Fig. 7****:** view from above of the guide rails **13** of the laser system;
- **Fig. 8****:** the A detail of the rail **13;**
- **Fig. 9****:** lateral side view of the guide rails **13** of the laser system;
- **Fig. 10****:** front side view of the cutting machine provided with the lens **14** for focusing the laser;
- **Fig. 11****:** detailed view of the cutting machine provided with the modified laser tubes **15** and with the mirrors **16;**
- **Fig. 12****:** the resulted flexible material visualizing the squares **17.**

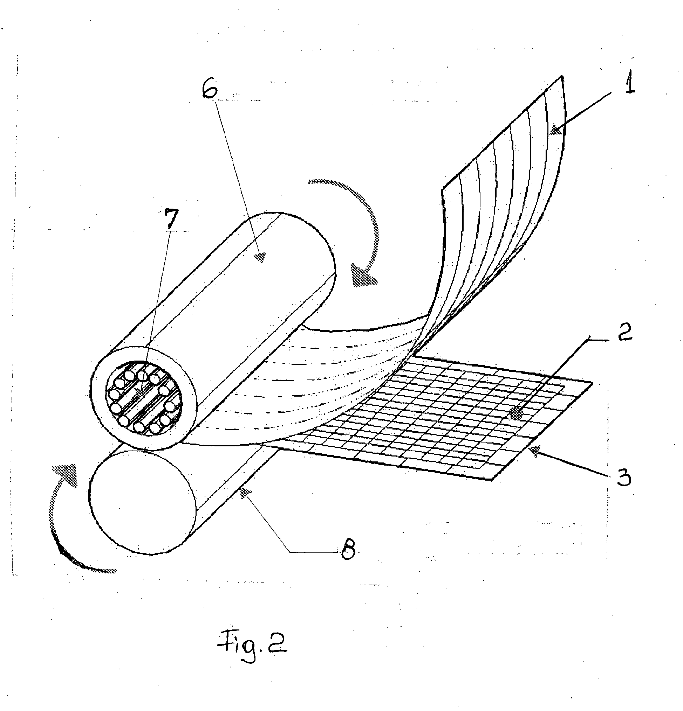

The process for realizing a flexible material from a rigid material, according o the invention, has the following steps:
- the wood layer **3** is dyed in the wanted colour with a special dye by applying the layer **4** above wood layer **3 (****Fig.1****).**
- the layer **2** of special liquid glue is applied on the back side of the wood layer **3** using a silk-screen process.
- a flexible support layer **1** is applied above the glue layer **2.**
- layer **1** is pressed together with the liquid glue layer **2** and the wood layer **3** by using a calander pressing machine **(****Fig.2****),** by rotating a steel cylinder **6** having some elements **7** preheated at 120°C; the rotation is reversed from the rubber cylinder **8.** A perfect permanent and stable glued operation is realized between layers **1, 2** and **3.**
- a special hardener layer **5** is applyed on the front side of the wood layer **3** which gives the resulted flexible material two properties: strenghthening and waterproofing.
- regular geometric shapes are cut in the wood layer **3** leaving the fabric untouched by using a modified CNC cutting laser machine.

The resulted "sanwich" is almost ready to be used **(****Fig.1****)** and it is formed of:
- flexible support layer **1,** which may be of leather or flexible plastic
- special liquid glue **2**
- wood rigid layer **3** having the thickness of approximately 0,5 - 0,6 mm
- special wood dye **4**
- special formula wood hardener **5**
This material still looks as hard rigid, rough and non-planar surface.
The process applies similarly to metals or rigid plastic materials.

The transformation of this material in a flexible and soft one is realized with the help of the key machine that cuts regular geometric shapes in half thickness of the wood layer **3.**

This device is a modified CNC cutting laser machine provided with some equipments designed with CAD soft. This machine cuts regular geometric shapes in the wood layer **3** of the above mentioned "sandwich", leaving the rest of the fabric untouched. The CNC cutting laser machine has been modified in order to get perfect cut patterns, overtaking the barriers of the wood layer **3** its self.

In order to cut a wood material efficiently, with precision and with a tolerance of 1/10 mm, the following three conditions must be fulfilled:
- the material to be cut must have a perfect plane surface
- the focusing distance between the laser output and the material has to be constant through all the surface to be cut
- the power of the laser beam must be constant during all working time

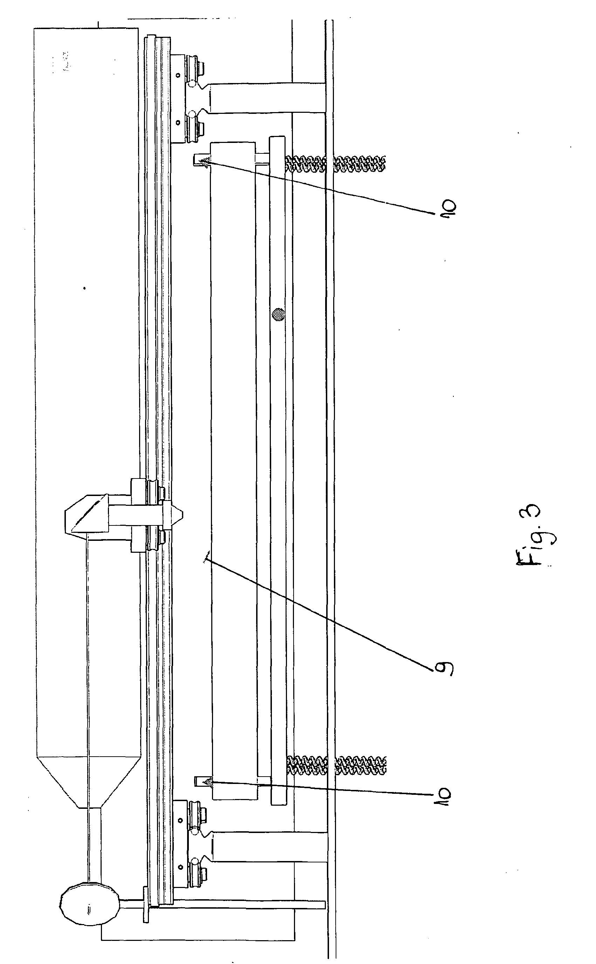

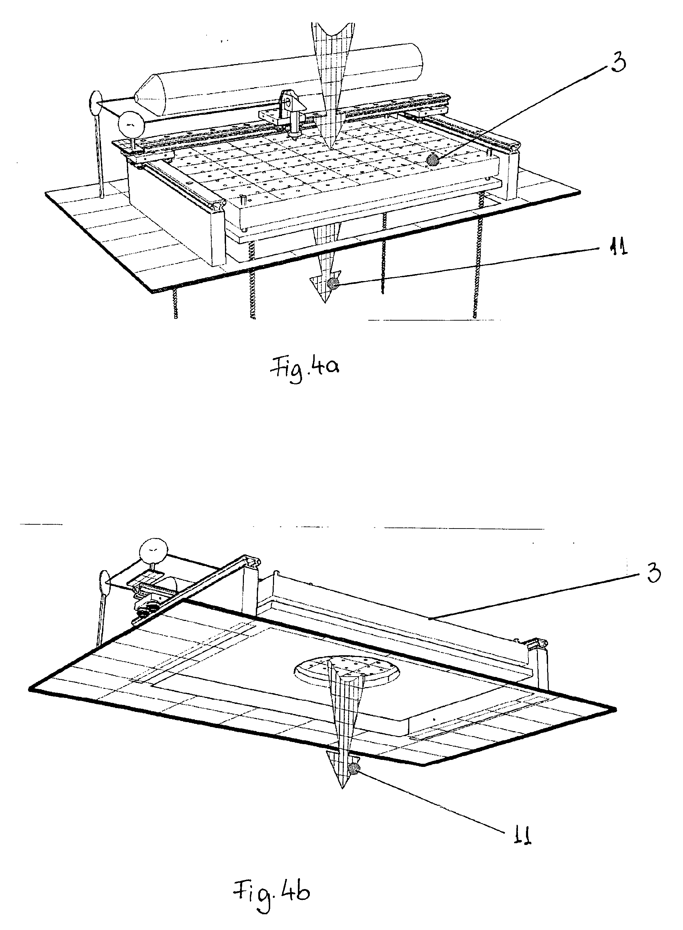

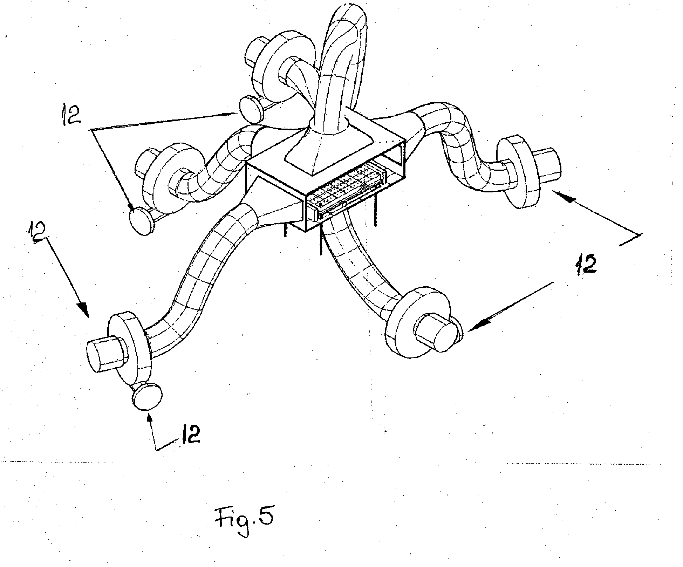

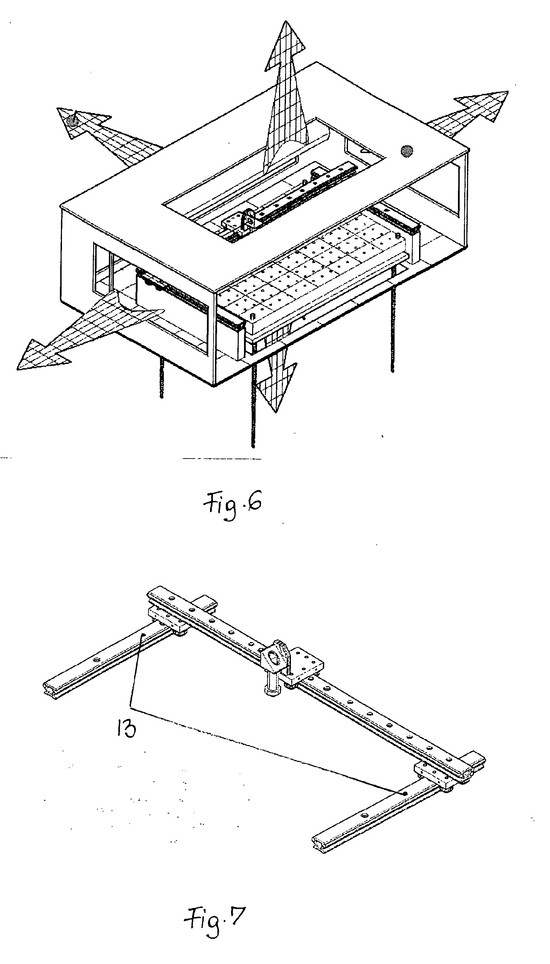

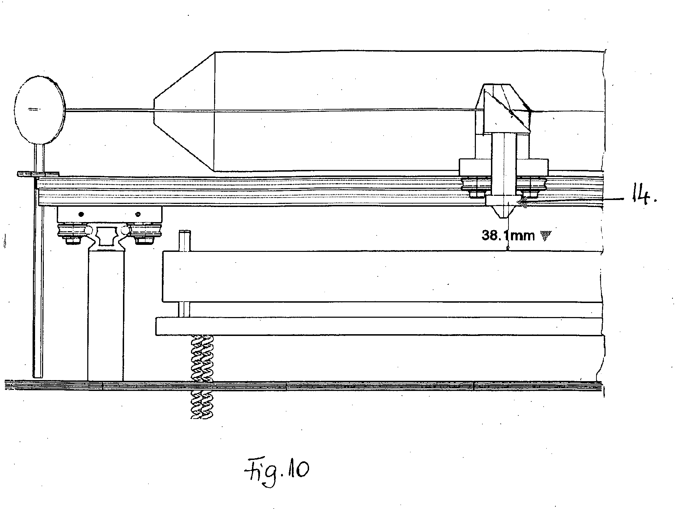

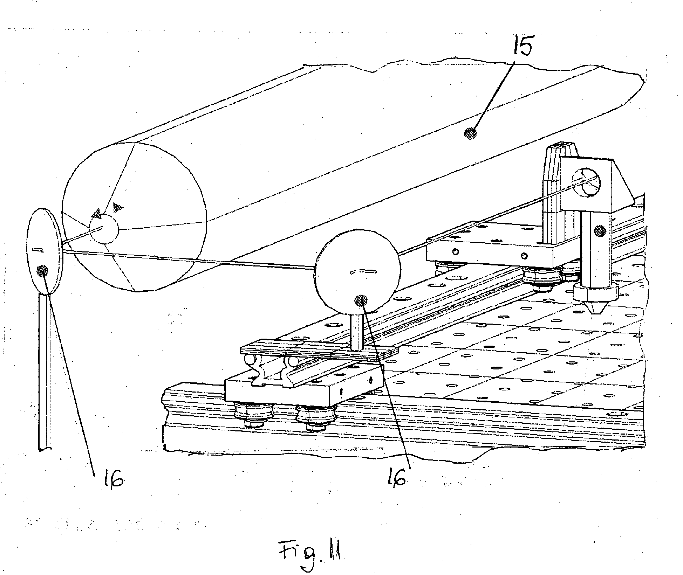

In order to solve these problems, the CNC cutting laser machine **(****Fig.3****)** presents the following modifications:
- modified working table **9** provided with an adjustment screw **10** with micrometer precision on X and Y axis which insures a perfect plane working table and perfect parallelism between laser gantry axis and the table **(****Fig.3****);**
- custom made vacuum source that maintain the wood layer **3** plane and glued on working table **9.** The vacuum created by aspiration of the air jet **11** eliminates the risk of generating waves on the resulted flexible material's surface and allows the laser source to focus on the surface of the material **(****Fig.4a****,b);**
- custom made exhaust gas outlet on the cutting machine's chassis. Practically, several gas vacuum cleaners **12** are used in order to keep the laser chamber clean. In this way, the exhausted gas do not affect and decrease the laser beam power and quality **(****Fig.5****,** **Fig.6****);**
- the two guide rails **13** of the laser system are made of aluminium with hollow profile which is much lighter reaching a repositioning accuracy of 0, 05 mm **(****Fig.7a****,** **Fig.8, and Fig.9****).** Only with this precision it is possible to obtain perfect patterns. The standard gantry system of a commercial laser cutting machine has a standard tolerance in repositioning accuracy of 0, 1 mm because of the weight of the construction materials. This tolerance is too high and generates errors when multiplying the pattern.
- the head of the laser is modified as follows: the average focusing distance to cut materials range from 63 mm to 100 mm and the depth of field (penetration of the laser beam into the material) vary from 3 mm to 20 mm. As said before, we just need to cut in half thickness the wood layer **3** of the "sandwich". In order to reduce the depht of action field of the laser beam, the device is provided with some focusing lens **14** that reduce the focusing distance of the laser beam to 38,1 mm and the depht of the penetration to 1 mm **(****Fig.10****);**
- the laser tube is also modified: the standard width of a laser cut in wood is about 0, 2 mm. This is too much wide. This device is provided with non-standard laser tubes **15** with smaller beam output size and with two mirrors **16,** producing a final cut width of 0, 1 mm **(****Fig.11****).**

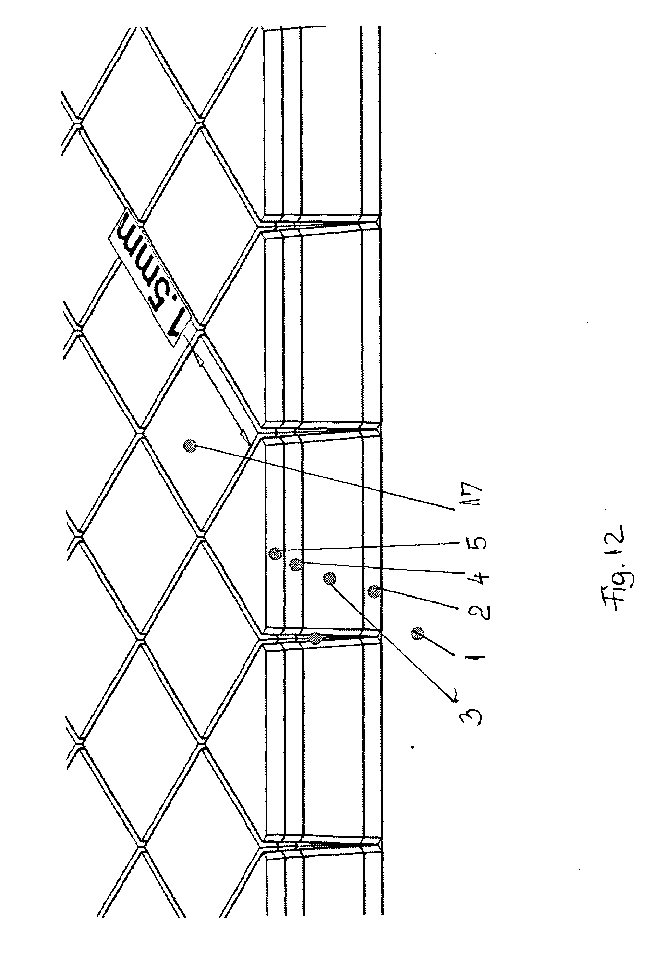

In this way, a flexible material is obtained and it presents some squares **17** on its surface **(****Fig.12****).**

The so resulted flexible material can be later manipulated, for example it can be cut in the wanted shapes or patterns even in heaps of 100 sheets tinted or natural looking, coloured or not.

Because the resulted material can be cut in very big multi-layers, the flexible material can be used in the classic manufacturing industry as substitute or supplement for fabric or leather.

## Claims

1. Process for realizing a flexible material from a rigid material, **where in,** it follows the following steps: a special dye layer **(4)** is applied on the wood layer **(3),** then a layer **(2)** of special liquid glue is applied on the back side of the wood layer **(3)** using a silk-screen process similar to that used in the ceramic and glass processing, then a flexible support layer **(1)** is applied above the glue layer **(2),** after which the flexible support layer **(1)** is pressed together with the liquid glue layer **(2)** and the wood layer **(3)** by using a calander pressing machine, then a special hardener layer **(5)** is applyed on the front side of the wood layer **(3)** and, in the end, regular geometric shapes are cut in half depth of the wood layer **(3)** leaving the fabric untouched.

2. Device for realizing a flexible material from a rigid material, similar with the CNC cutting laser devices, **where in,** the device is provided with a working table **(9)** provided with a adjusting screw **(10)** with micrometer precision on X and Y axis, a vacuum source that keeps the wood layer **(3)** plane and in touch with the working table **(9),** some gas vacuum cleaners **(12),** two guide rails **(13)** of the laser system made of aluminium with hollow profile system, some focusing lens **(14),** some modified laser tubes **(15)** and two mirrors **(16)** producing a final cut width of 0,1 mm.
